(19) Europäisches Patentamt
European Patent Office
Office européen des brevets

(11) **EP 3 310 649 B1**

(12) **FASCICULE DE BREVET EUROPEEN**

(45) Date de publication et mention
de la délivrance du brevet:
**25.12.2019 Bulletin 2019/52**

(51) Int Cl.:
***B64C 3/14*** *(2006.01)*          ***B64D 27/18*** *(2006.01)*
***B64D 33/04*** *(2006.01)*

(21) Numéro de dépôt: **16734586.7**

(22) Date de dépôt: **17.06.2016**

(86) Numéro de dépôt international:
**PCT/EP2016/064080**

(87) Numéro de publication internationale:
**WO 2016/203015 (22.12.2016 Gazette 2016/51)**

(54) **SYSTEME DE REDUCTION DU BRUIT D'INSTALLATION D'UNE AILE D'AVION**

SYSTEM ZUR GERÄUSCHREDUZIERUNG EINER FLUGZEUGFLÜGELANLAGE

SYSTEM FOR REDUCING THE NOISE OF AN AEROPLANE WING INSTALLATION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **19.06.2015 FR 1555669**

(43) Date de publication de la demande:
**25.04.2018 Bulletin 2018/17**

(73) Titulaire: **Centre National de la Recherche
Scientifique
75016 Paris (FR)**

(72) Inventeurs:
• **JORDAN, Peter
75016 Paris Cedex 16 (FR)**
• **CAVALIERI, André
SP 12240-140 (BR)**
• **WOLF, William
SP 13148-252 (BR)**
• **PIANTANIDA, Selene
75016 Paris Cedex 16 (FR)**
• **JAUNET, Vincent
75016 Paris Cedex 16 (FR)**

• **HUBER, Jérôme
75016 Paris Cedex 16 (FR)**

(74) Mandataire: **IPAZ
Parc Les Algorithmes, Bâtiment Platon
CS 70003 Saint-Aubin
91192 Gif-sur-Yvette Cedex (FR)**

(56) Documents cités:
**US-A- 4 767 083      US-A1- 2007 023 571**

• **Vinod Mengle ET AL: "Flaperon Modification
Effect on Jet-Flap Interaction Noise Reduction for
Chevron Nozzles" In: "13th AIAA/CEAS
Aeroacoustics Conference (28th AIAA
Aeroacoustics Conference)", 21 mai 2007
(2007-05-21), American Institute of Aeronautics
and Astronautics, Reston, Virigina,
XP055269427, ISBN: 978-1-62410-003-1 DOI:
10.2514/6.2007-3666, cité dans la demande page
2, ligne 21 page 2, ligne 33 - ligne 34 page 3, ligne
27 - ligne 28 page 3, ligne 42 - ligne 46; figure 1
figures 3b-e, 6, 7**

**Description**

L'invention concerne un avion à bruit d'installation réduit et plus précisément un système d'aile d'avion et de réacteur.

La réduction du bruit est un des enjeux principaux de la conception des réacteurs d'avion. Typiquement, le bruit émis par un réacteur est réduit en augmentant son diamètre. Une conception de réacteur à flux multiples permet d'augmenter ce diamètre tout en assurant une consommation de carburant moindre au décollage et aux allures de croisière. Un réacteur à double flux peut par exemple être caractérisé par son taux de dilution, c'est-à-dire le taux du débit massique d'air qui contourne le cœur du réacteur d'une part, et du débit massique d'air qui passe dans le cœur du réacteur et est impliqué dans la combustion d'autre part. Cette technique est particulièrement appliquée aux avions de transport civil dont la vitesse de croisière se situe par exemple entre Mach 0,6 et Mach 0,9. Les taux de contournement des avions de ligne peuvent être supérieurs à 12 et sont qualifiés de UHBPR (acronyme anglais de *Ultra-High-Bypass-Ratio*).

L'utilisation d'un réacteur au diamètre élevé nécessite de réduire la distance séparant la surface de l'aile et la partie du réacteur dont elle est la plus proche. En fonctionnement, ce rapprochement favorise une interaction entre l'écoulement turbulent du jet du réacteur et la surface solide présentée par l'aile. Cette interaction est la cause d'une émission sonore, appelée bruit d'installation.

Mengle *et al.* (Mengle, V. G., Stoker, R. W., Brusniak, L., Elkoby, R., & Thomas, R. H., 2007, Mai, Flaperon modification effect on jet-flap interaction noise reduction for chevron nozzles, 13th AIAA/CEAS Aeroacoustics Conférence, 28th AIAA Aeroacoustics Conference, p. 3666) divulguent plusieurs dispositifs permettant, dans une certaine mesure, la réduction du bruit d'installation. Le volet, fixé à l'aile en interaction avec le jet du réacteur, comporte un bord de fuite en dents de scie et/ou des générateurs de turbulences, tels que des pointes. La dimension de ces dispositifs est sensiblement vingt fois inférieure au diamètre du réacteur. Les effets de ces deux dispositifs sont évalués avec et sans la présence de dents de scie sur l'ajutage du réacteur. La présence de dents de scies sur l'ajutage du réacteur permet une diminution du bruit direct du réacteur, mais les réductions du bruit d'installation apportées par la modification des volets fixés à l'aile sont marginales.

L'invention vise à surmonter au moins l'un des inconvénients précités de l'art antérieur.

Un objet de l'invention permettant d'atteindre ce but est un dispositif comprenant :

- une aile d'avion ;
- au moins un réacteur à haut taux de dilution fixé à ladite aile, adapté à émettre un jet intercepté exclusivement par une première partie du bord de fuite de ladite aile, les angles orientés $\alpha$ étant définis par un vecteur suivant le sens dudit jet et par un vecteur suivant la tangente en un point de ladite première partie du bord de fuite et orienté vers le saumon de ladite aile, et les angles orientés $\gamma$ étant définis par un vecteur suivant le sens d'un dit jet et un vecteur suivant la tangente en un point dudit bord de fuite n'appartenant pas à ladite première partie du bord de fuite et orienté vers le saumon de ladite aile;

caractérisé en ce que :

- la plage formée par l'ensemble des angles orientés $\alpha$ est comprise dans une plage d'angles délimitée par 5° et 65° ; et en ce que
- la moyenne sur la longueur dudit bord de fuite des angles orientés $\gamma$ est supérieure d'au moins 10° à la moyenne des angles $\alpha$ sur la longueur de ladite première partie du bord de fuite.

Avantageusement, le dispositif comporte une dite première partie du bord de fuite linéaire, ledit angle $\alpha$ étant constant et compris dans une plage d'angles délimitée par 5° et 65°, et préférentiellement compris dans une plage d'angles choisie parmi la plage délimitée par 40° et 65°.

Avantageusement, ladite aile dudit dispositif comporte au moins une partie principale fixe dont une partie du bord longitudinal arrière est adaptée à intercepter ledit jet, et dans lequel la plage formée par l'ensemble des angles orientés a' définis par un vecteur suivant le sens dudit jet et un vecteur suivant la tangente en chaque point de ladite partie du bord longitudinal arrière et orienté vers le saumon de ladite aile, est comprise dans une plage d'angles choisie parmi la plage délimitée par 5° et 65°.

Avantageusement, dans un dispositif dans lequel chaque dit angle a' est compris dans la plage délimitée par 5° et 65°, la moyenne sur la longueur dudit bord longitudinal arrière des angles orientés $\gamma$' formés par un vecteur suivant le sens d'un dit jet et un vecteur suivant la tangente en un point dudit bord longitudinal arrière n'appartenant pas à chaque dite partie du bord longitudinal arrière et orienté vers le saumon de ladite aile, est supérieure d'au moins 10° à la moyenne des angles a' de chaque dite partie du bord longitudinal arrière.

Avantageusement, le rapport de la distance entre l'axe principal du réacteur et l'aile, et du diamètre dudit jet à la sortie dudit réacteur est inférieur à 2 et préférentiellement inférieur à 1,5.

Avantageusement, la vitesse maximale de l'écoulement gazeux à la sortie dudit réacteur dudit dispositif est comprise entre 0,3 Mach et 0,9 Mach et préférentiellement entre 0,6 Mach et 0,8 Mach.

Avantageusement, le nombre de Strouhal de l'écoulement gazeux autour de ladite aile dudit dispositif est inférieur à 1,5 et préférentiellement inférieur à 1.

Un autre objet de l'invention est un avion comprenant au moins deux dispositifs décrits précédemment.

La description suivante présente plusieurs exemples de réalisation du dispositif de l'invention : ces exemples sont non limitatifs de la portée de l'invention. Ces exemples de réalisation présentent à la fois les caractéristiques essentielles de l'invention ainsi que des caractéristiques additionnelles liées aux modes de réalisation considérés. Par souci de clarté, les mêmes éléments porteront les mêmes repères dans les différentes figures.

L'invention sera mieux comprise et d'autres avantages, détails et caractéristiques de celle-ci apparaîtront au cours de la description explicative qui suit, faite à titre d'exemple en référence aux dessins annexés dans lesquels:

- la figure 1 illustre schématiquement une vue de dessus du système constitué d'un réacteur et d'une aile d'avion selon un exemple de l'art antérieur et selon une réalisation de l'invention ;

- la figure 2 illustre schématiquement une vue de dessus d'un système constitué d'un réacteur et d'une l'aile d'avion comportant deux volets, selon un exemple de l'art antérieur et selon une réalisation de l'invention ;

- la figure 3 illustre schématiquement un système expérimental de mesure du bruit d'installation ;

- la figure 4 illustre des intensités de fluctuations hydrodynamiques dans un plan d'un paquet d'onde utilisé pour représenter le jet dans des modélisations numériques du dispositif ;

- La figure 5 illustre différents niveaux de pression acoustique (SPL) en fonction du nombre de Strouhal du dispositif, de la position des capteurs acoustiques et de la configuration du dispositif ;

- la figure 6 illustre des dépendances polaires et azimutales du champ sonore en fonction de l'éloignement radial de l'aile au réacteur ;

- la figure 7 illustre la dépendance du champ acoustique diffracté en fonction de la séparation radiale entre le réacteur et l'aile et en fonction de la vitesse de l'écoulement en sortie du réacteur ;

- la figure 8 illustre les variations de SPL en fonction de la vitesse d'écoulement M en sortie d'un réacteur ;

- la figure 9 illustre l'effet de l'angle de balayage sur la diffraction du bruit d'installation ;

- la figure 10 illustre l'effet de l'angle de balayage sur la diffraction du bruit d'installation ;

- la figure 11 illustre l'augmentation de la puissance sonore totale pour différents angles de balayage et pour différentes vitesses d'écoulement ;

- la figure 12 illustre les SPL en fonction de $\Phi$ et de x/D dans des conditions expérimentales et de simulation numériques pour différents angles de balayage ;

- la figure 13 illustre les simulations expérimentales de mesure du bruit de systèmes d'aile et de réacteur ;

- la figure 14 illustre schématiquement en vue de dessus un avion comportant des systèmes selon une réalisation de l'invention.

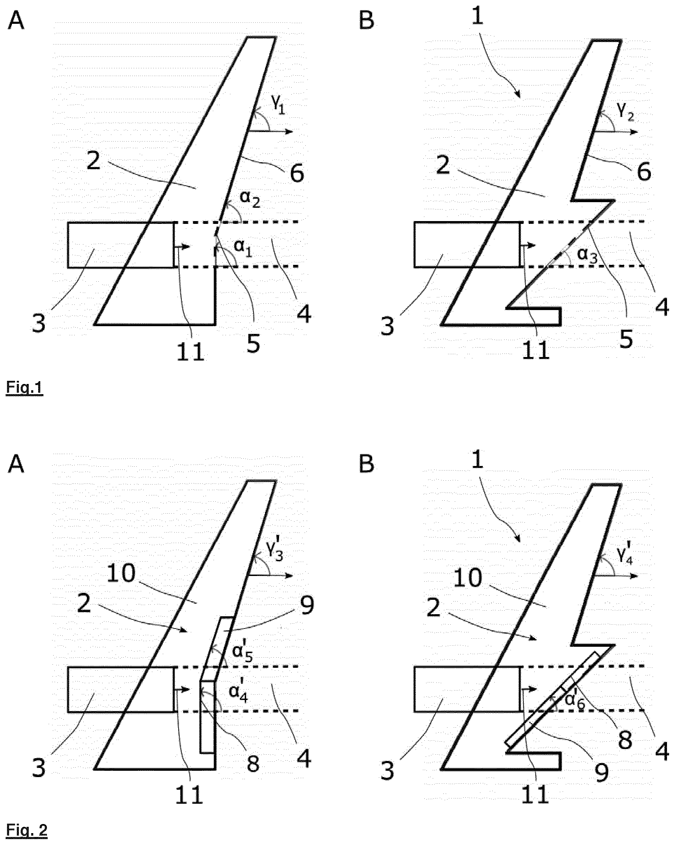

La figure 1 illustre schématiquement une vue de dessus d'un système constitué d'un réacteur 3 et d'une aile 2 d'avion selon un exemple de l'art antérieur et selon une réalisation de l'invention. Le panneau A de la figure 1 illustre schématiquement une vue de dessus du système selon un exemple de l'art antérieur et dont le profil de l'aile 2 est sensiblement celui de l'aile d'un avion A320 d'Airbus. Le jet 4 du réacteur, délimité par des petits pointillés, est en interaction avec le bord de fuite de l'aile 2. Deux parties peuvent être distinguées dans le bord de fuite : une première partie du bord de fuite 5 en interaction avec le jet 4, représentée en pointillés larges, et une seconde partie 6 du bord de fuite comportant la ou les parties du bord de fuite n'appartenant pas à la première partie 5 du bord de fuite.

L'angle ou les angles orientés formés par un vecteur suivant le sens 11 du jet 4 et par un vecteur suivant la tangente en un point de la première partie 5 du bord de fuite 5 et orienté vers le saumon, ou extrémité de l'aile 2 sont nommés $\alpha$. L'angle ou les angles orientés formés par un vecteur suivant le sens 11 du jet 4 et par un vecteur suivant la tangente en un point de la première partie 6 du bord de fuite 5 et orienté vers le saumon, ou extrémité de l'aile 2 sont nommés $\gamma$.

Dans le dispositif illustré dans le panneau A de la figure 1, deux angles $\alpha$ sont illustrés le long de la première partie 5 du bord de fuite : de bas en haut, $\alpha_1$ qui dans cet exemple est sensiblement égal à 90°, puis $\alpha_2$, qui dans cet exemple est sensiblement égal à 70°. Dans la seconde partie 6 du bord de fuite un angle $\gamma$ est illustré : l'angle $\gamma_1$, sensiblement égal à 70°.

Le panneau B de la figure 1 illustre schématiquement une vue de dessus du système 1 selon un exemple de réalisation de l'invention. Comme dans le panneau A de la même figure, le jet 4 du réacteur, délimité par des petits pointillés, est en interaction avec le bord de fuite de l'aile 2. Deux parties peuvent être distinguées dans le bord de fuite : une première partie 5 du bord de fuite en interaction avec le jet 4, représentée en pointillés larges, et une seconde partie 6 du bord de fuite comportant la ou les parties du bord de fuite n'appartenant pas à la première partie 5 du bord de fuite. L'angle ou les angles orientés formés par un vecteur suivant le sens 11 du jet et un vecteur suivant la tangente en un point de la première partie 5 du bord de fuite et orienté vers le saumon sont nommés $\alpha$. L'angle ou les angles formés par un vecteur suivant le sens 11 du jet et un vecteur suivant la tangente en un point de la seconde partie 6 du bord de fuite et orienté vers le saumon sont nommés $\gamma$.

Dans le dispositif illustré dans le panneau B de la figure 1, selon une réalisation de l'invention, un angle $\alpha$ est illustré le long de la première partie 5 du bord de fuite: $\alpha_3$ est sensiblement égal à 45° Dans la seconde partie du bord de fuite 6, un angle $\gamma$ est illustré, $\gamma_2$, sensiblement égal à 70°.

De manière plus générale, dans les réalisations de l'invention, la première partie 5 du bord de fuite comporte une plage d'angles $\alpha$ comprise entre 5° et 65°. Dans une réalisation particulière de l'invention illustrée par le panneau B de la figure 1, la première partie du bord de fuite est linéaire, et l'angle $\alpha$ est constant et compris entre 5° et 65°.

On peut définir la moyenne des angles $\alpha$, $<\alpha>$ sur la longueur de la première partie 5 du bord de fuite et la moyenne des angles $\gamma$, $<\gamma>$ sur la longueur de la seconde partie du bord de fuite. Dans des réalisations de l'invention, l'aile est caractérisée par l'inégalité $\langle\gamma\rangle > \langle\alpha\rangle + 10°$ dans le cas où les angles $\alpha$ appartiennent à la plage d'angle délimitée par 5° et 65°. Ces inégalités traduisent la présence d'un angle de balayage plus élevé le long des parties du bord de fuite en interaction avec le ou les jets.

Dans l'ensemble des réalisations de l'invention décrites, on considère par « réacteur » un réacteur à haut taux de dilution, c'est-à-dire un réacteur dont le taux de dilution est supérieur à 5 et préférentiellement supérieur à 10. En effet, le rapprochement de ces types de réacteurs avec l'aile 2 est l'une des causes majeures du bruit d'installation.

La figure 2 illustre schématiquement une vue de dessus d'un système constitué d'un réacteur 3 et d'une aile 2 d'avion comportant deux volets 9, selon un exemple de l'art antérieur et selon une réalisation de l'invention. Le panneau A de la figure 2 illustre schématiquement une vue de dessus du système selon un exemple de l'art antérieur et dont le profil de l'aile 2 est sensiblement celui de l'aile d'un avion A320 d'Airbus. Le jet 4 du réacteur, délimité par des petits pointillés, est en interaction avec le bord de fuite de l'aile 2 et avec une partie 8 du bord longitudinal arrière de la partie principale fixe 10 de l'aile 2.

L'angle ou les angles formés par un vecteur suivant le sens 11 du jet 4 et un vecteur suivant la tangente en un point de la partie 8 du bord longitudinal arrière de la partie principale fixe 10 et orienté vers le saumon sont nommés a'. L'angle ou les angles formés par un vecteur suivant le sens 11 du jet 4 et un vecteur suivant la tangente en un point du bord longitudinal arrière de la partie principale fixe 10 de l'aile et orienté vers le saumon, n'appartenant pas à la partie 8, sont nommés $\gamma'$.

Dans le dispositif illustré dans le panneau A de la figure 2, deux angles a' sont illustrés le long de la partie 8 du bord longitudinal arrière: de bas en haut, $\alpha'_4$ qui dans cet exemple est sensiblement égal à 90°, puis $\alpha'_5$, qui dans cet exemple est sensiblement égal à 70°. Dans une partie du bord longitudinal arrière n'appartenant pas à la partie 8, un angle $\gamma'$ est illustré : l'angle $\gamma'_3$ est sensiblement égal à 70°.

Le panneau B de la figure 2 illustre schématiquement une vue de dessus du système 1 selon un exemple de réalisation de l'invention. Comme dans le panneau A de la même figure, le jet 4 du réacteur, délimité par des petits pointillés, est en interaction avec le bord de fuite de l'aile 2 et avec une partie 8 du bord longitudinal arrière de la partie principale fixe 10 de l'aile 2. L'angle ou les angles formés par un vecteur suivant le sens 11 du jet et un vecteur suivant la tangente en un point de la partie 8 du bord longitudinal arrière et orienté vers le saumon, sont nommés a'. L'angle ou les angles formés par un vecteur suivant le sens 11 du jet 4 et un vecteur suivant la tangente en un point du bord longitudinal arrière de la partie principale fixe 10 de l'aile et orienté vers le saumon, n'appartenant pas à la partie 8, sont nommés $\gamma'$.

Dans le dispositif illustré dans le panneau B de la figure 2, selon une réalisation de l'invention, un angle a' est illustré le long de la partie 8 du bord longitudinal arrière de la partie fixe 10: $\alpha'_6$ est sensiblement égal à 45° Dans la partie du bord longitudinal arrière n'appartenant pas à la partie 8, un angle $\gamma'_4$ est illustré, sensiblement égal à 70°.

De manière plus générale, dans les réalisations de l'invention, la partie 8 du bord longitudinal arrière de la partie fixe 10 de l'aile, peut comporter une plage d'angles a' comprise entre 5° et 65°. Dans une réalisation particulière de l'invention illustrée par le panneau B de la figure 2, la partie 8 du bord longitudinal arrière est linéaire, et l'angle $\alpha'_6$ est constant et compris entre 5° et 65°.

On peut définir la moyenne des angles α', <α'> sur la longueur de la première partie 8 du bord longitudinal arrière et la moyenne des angles γ', <γ'> sur la longueur du bord longitudinal arrière n'appartenant pas à la partie 8. Avantageusement, l'aile, dans des réalisations de l'invention, peut être caractérisée par l'inégalité $\langle\gamma\rangle > \langle\alpha\rangle + 10°$ dans le cas où les angles a' appartiennent à la plage d'angle délimitée par 5° et 65°. Ces inégalités traduisent la présence d'un angle de balayage plus élevé (ou d'un décrochage) le long des parties 8 du bord longitudinal arrière en interaction avec le ou les jets.

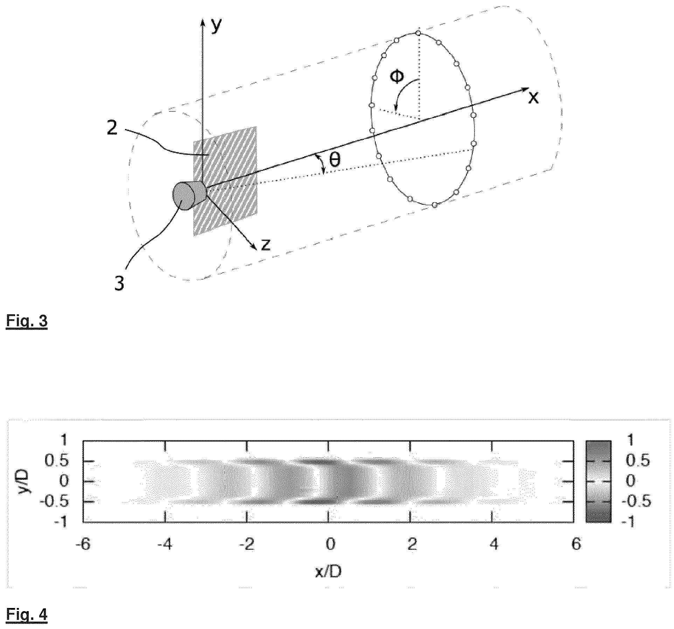

La figure 3 illustre schématiquement un système expérimental de mesure du bruit d'installation. Les expériences de mesure du bruit des dispositifs sont menées dans une chambre anéchoïque dont la fréquence de coupure est de 212 Hz. Une aile 2 est installée sur un réacteur 3 fixe dans cette chambre. L'ajutage du réacteur 3 utilisé possède un diamètre D de 0,05 m. Les mesures acoustiques sont réalisées par un réseau circulaire de microphones ou capteurs acoustiques, disposés autour de l'axe des *x* (présentés dans la figure 3 par des petits cercles).

On définit l'angle de balayage β (ou *sweep* en anglais) par π/2 dont on soustrait l'angle α ou γ formé par la direction 11 du jet du réacteur et la direction formée par un point du bord de fuite d'une aile, soit $\beta = \pi/2 - \alpha$ et $\beta = \pi/2 - \gamma$. La direction 11 du jet du réacteur définit l'axe des x. On peut définir un repère (x,y,z) par rapport à cet axe, comme décrit dans la figure 3.

Des ailes planes peuvent être montées dans le dispositif expérimental de mesure de manière à ce que leur surface plane soit parallèle au jet. On peut par exemple faire varier les angles de balayage β de ces ailes entre 0 et 45°, la vitesse du jet M en Mach dans une plage comprise entre 0,4 Mach et 0,9 Mach et la distance radiale r de l'axe principal du réacteur (selon x) et de l'aile dans la plage définie par 0,6 < r/D < 2.

Pour chaque mesure, un réseau azimutal de 18 microphones, ou capteurs acoustiques, est utilisé. Son rayon $r_m$ est défini par $r_m/D = 14,3$. Sa position axiale (selon x) peut varier de manière à mesurer le champ acoustique sur une surface cylindrique contenant le dispositif 1 constitué de l'aile et du réacteur. La plage de mesure peut être définie par -2,5 < x/D < 39. La figure 3 illustre également les angles polaires (θ) et azimutaux (Φ) conventionnellement utilisés.

Le dispositif expérimental décrit dans la figure 3 peut être modélisé numériquement de plusieurs manières. Deux méthodes utilisées sont décrites: l'utilisation d'une fonction de Green ajustée (TGF pour *Tailored Green Function*) et l'utilisation de la méthode des éléments finis de frontière (BEM). Un paquet d'onde cinématique est utilisé comme source sonore dans les deux types de modélisations.

La figure 4 illustre des intensités de fluctuations hydrodynamiques dans un plan d'un paquet d'onde utilisé pour représenter le jet dans des modélisations numériques du dispositif. Le profil du paquet d'onde a été défini à l'aide de mesures moyennes de l'émission acoustique d'un jet désinstallé, c'est-à-dire d'un jet dépourvu d'aile. Le paquet d'onde modélisé peut s'écrire sous la forme suivante :

$$T_{xx}(x,r,m,\omega) = 2\rho_0 \bar{u}_x(r)\hat{u}_x(r,m,\omega)\mathrm{e}^{-\mathrm{i}k_H x}\mathrm{e}^{-\frac{x^2}{L^2}} \qquad (1)$$

Dans (1), $\bar{u}_x(r)$ représente le profil moyen des vitesses à x = D. Les fluctuations des vitesses $\hat{u}_x(r,m,\omega)$ sont modélisées par des ondes d'instabilités linéaires d'impulsion ω et de mode azimutal *m* en utilisant le profil moyen des vitesses d'un écoulement parallèle. Le nombre d'onde axial $k_H$ est déterminé en utilisant des résultats de stabilité linéaire. La source est une onde convectée comprise dans une enveloppe Gaussienne. Les paramètres libres (l'amplitude et l'échelle de longueur L) sont déduits de mesures de pression en champ lointain du jet désinstallé. Le calcul de la radiation du son, effectué en utilisant l'analogie acoustique de Lighthill sans effet de surface, permet un bon ajustement du modèle aux expériences, pour de faibles angles polaires (décrit dans Cavalieri, A. V., Jordan, P., Colonius, T., & Gervais, Y., 2012, Axisymmetric superdirectivity in subsonic jets, Journal of fluid Mechanics, 704, 388-420). On peut choisir par exemple de modéliser un jet asymétrique avec m=0 et M=0,6 Mach. Le mode asymétrique domine généralement le rayonnement car il domine la partie irrotationnelle du champ proche hydrodynamique (décrit dans Tinney, C. E., & Jordan, P., 2008, The near pressure field of co-axial subsonic jets, Journal of Fluid Mechanics, 611, 175-204).

Le son radié par la source en présence de différentes ailes est ensuite calculé en utilisant deux outils de simulation de la propagation.

Le champ sonore peut être calculé via une convolution de la source sonore avec une fonction de Green ajustée, utilisée pour simuler la présence d'une aile plate, rigide et semi-infinie, et dont une rotation selon l'axe z est possible pour rendre compte de l'effet lié aux variations de l'angle de balayage.

La pression en champ lointain est décrite par :

$$p(\mathbf{x}, \omega) = \int_{\mathcal{V}} \frac{\partial^2 T_{ij}}{\partial y_i \partial y_j}(\mathbf{y}, \omega) G(\mathbf{x}, \mathbf{y}, \omega)\mathrm{d}\mathbf{y}, \qquad (2)$$

où $\mathbf{x}$ et $\mathbf{y}$ sont les positions de l'observateur et de la source, et, respectivement, $T_{ij}$ représente les composantes du tenseurs des contraintes et $\omega$ la pulsation. La fonction de Green $G$ pour une aile plate, semi-infinie et rigide est donnée (Williams, J. E., & Hall, L. H., 1970, Aerodynamic sound generation by turbulent flow in the vicinity of a scattering half plane. Journal of Fluid Mechanics, 40(04), 657-670) par:

$$G(\mathbf{x}, \mathbf{y}, \omega) = \frac{\mathrm{e}^{\frac{1}{4}\mathrm{i}\pi}}{\sqrt{\pi}}\left[\frac{\mathrm{e}^{-\mathrm{i}kR}}{4\pi R}\int_{-\infty}^{u_R} \mathrm{e}^{-\mathrm{i}u^2}\mathrm{d}u + \frac{\mathrm{e}^{-\mathrm{i}kR'}}{4\pi R'}\int_{-\infty}^{u_{R'}} \mathrm{e}^{-\mathrm{i}u^2}\mathrm{d}u\right] \qquad (3)$$

où $k = \omega/c_0$ est le nombre d'onde acoustique, R est la distance entre l'observateur et la source, R' est la distance entre l'observateur et la source image. En considérant des coordonnées cylindriques $(r,\theta,z)$ dont l'origine est située sur le bord de fuite de l'aile, l'axe z parallèle au bord de fuite, $\theta=0$ à la surface de l'aile et $0<\theta<2\pi$, on a :

$$u_R = 2\sqrt{\frac{kr_0 r_s}{B + R}}\cos\left(\frac{\theta_O - \theta_S}{2}\right), \qquad (4)$$

$$u_{R'} = \left|2\sqrt{\frac{kr_0 r_s}{B + R'}}\cos\left(\frac{\theta_O + \theta_S}{2}\right)\right| \text{ et} \qquad (5)$$

$$B = \sqrt{(r_O + r_S)^2 + (z_O - z_S)^2} \qquad (6)$$

où les indices S et O se réfèrent respectivement aux coordonnées de la source et de l'observateur. Les intégrales de Fresnel de (3) sont calculées numériquement en utilisant la méthode décrite dans Zhang, S., & Jin, J. M.,1996, Computation of special functions, Wiley-Interscience. La solution en champ lointain pour le jet seul est obtenue en utilisant la fonction de Green en champ libre $G_0(\mathbf{x},\mathbf{y},\omega)$ donnée par :

$$G_0(\mathbf{x}, \mathbf{y}, \omega) = \frac{\mathrm{e}^{-\mathrm{i}kR}}{4\pi R} \qquad (7)$$

à la place de G dans l'équation (2).

Le champ sonore peut, de manière alternative, être calculé par la méthode des éléments finis de frontière (BEM). Ce second modèle de propagation est basé sur la solution d'une équation d'Helmholtz dont les conditions aux limites correspondent à la distribution en pression sur la surface de l'aile. Dans ce cas, la géométrie de l'aile correspond exactement à celle de l'expérience. Une formulation par la méthode des éléments finis de frontière, accélérée par une méthode multipolaire rapide (FMM) est utilisée. La pression acoustique de l'équation d'Helmholtz réalisée dans le contexte d'une formulation BEM est décrite par :

$$c(\mathbf{x})p(\mathbf{x}, \omega) = -\int_{\mathcal{S}} \frac{\partial G_0}{\partial n_y}(\mathbf{x}, \mathbf{y}, \omega)p(\mathbf{y}, \omega)\mathrm{d}\mathbf{y} + \int_{\mathcal{V}} \frac{\partial^2 T_{ij}}{\partial y_i \partial y_j}(\mathbf{y}, \omega)G_0(\mathbf{x}, \mathbf{y}, \omega)\mathrm{d}\mathbf{y} \qquad (8)$$

où c(x) est égal à ½ quand x est sur une surface élémentaire limite $S$ et c(x) est égal à 1 quand x est dans le champ acoustique. Le terme $\partial(.)/\partial n_y$ représente une dérivée normale dirigée vers l'intérieur calculée à un élément limite $\mathbf{y}$. Dans la description, les conditions aux limites des surfaces rigides sont données à la surface d'un aile plate, soit $\partial p/\partial n_y = 0$. La procédure itérative de gradients conjugués quadrillés (CGS, acronyme de *Conjugate Gradients Squared*) est utilisée pour résoudre le système d'équations découlant de la BEM, et la FMM est utilisée pour accélérer les calculs de matrices vectorielles de la procédure CGS.

Les figures suivantes présentent à la fois des résultats expérimentaux utilisant le simulateur expérimental décrit en figure 3 et des résultats numériques, utilisant les méthodes décrites précédemment.

L'effet principale observé lors de mesures expérimentales d'une l'aile est l'amplification basse fréquence du son radié (jusqu'à 20dB supérieur au cas non-installé). Cet effet est dû à la diffraction des sources de fluctuation hydrodynamique par le bord de l'aile. Le champ diffracté est directif. Les maxima sonores sont dirigés perpendiculairement à l'aile, ce que l'on définit par « côtés » quand l'aile est installée verticalement. On définit par $St$ le nombre de Strouhal, soit $St = fD/M,$ avec f la fréquence du paquet d'onde décrit dans la figure 4. L'amplitude de l'amplification acoustique basse fréquence (pour St<1) est très dépendante de la séparation radiale du réacteur et de l'aile. L'écart à haute fréquence entre les configurations installées et la configuration non-installée est dû à des réflexions partielles incohérentes du champ sonore incident qui seraient totales dans le cas d'une aile infinie, c'est-à-dire 3dB.

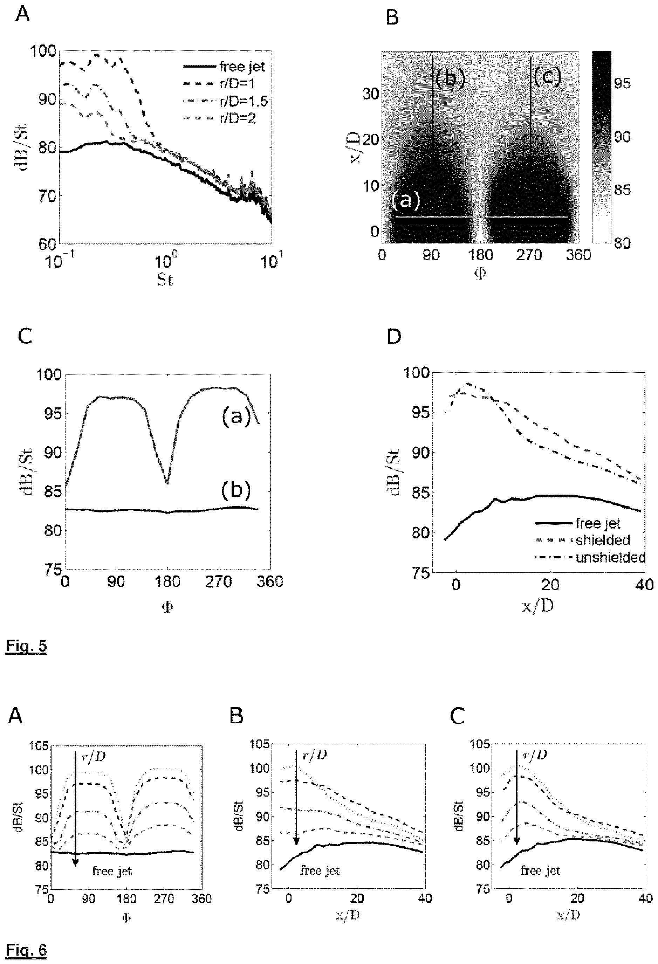

La figure 5 illustre différents niveaux de pression acoustique (SPL) en fonction du nombre de Strouhal du dispositif, de la position des capteurs acoustiques et de la configuration du dispositif. Le panneau A de la figure 5 illustre un spectre sonore mesuré par le nombre adimensionné dB/St, caractéristique du SPL, en fonction de St. Les quatre courbes correspondent respectivement au cas d'un jet sans aile, et aux conditions d'éloignement d'un jet et d'une aile caractérisées par r/D = 1, 1,5 et 2 (en pointillés). Les mesures sont effectuées dans le cas où $(\theta,\Phi) =(90°, 90°)$ (observation perpendiculaire à la surface de l'aile), M= 0,4 Mach et l'angle de balayage du bord de fuite $\beta = 0°$. On définit dans la suite de la description un coté protégé du jet correspondant au demi-espace où l'aile est comprise, dont la limite est le plan (x,y). L'autre demi-espace est défini comme côté non-protégé. Les mesures du panneau A de la figure 5 sont réalisées du côté non-protégé. Dans des réalisations de l'invention, décrites dans les figures 1 et 2, le nombre de Strouhal de l'écoulement gazeux autour de l'aile est inférieur à 1,5 et préférentiellement à 1.

Le panneau B de la figure 5 illustre une densité spectrale de puissance (PSD) mesurée en fonction des coordonnées axiales et azimutales des capteurs acoustiques. Un maxima de la SPL étant observé pour $St \simeq 0,2$ dans le panneau A de la figure 5, les effets de différents paramètres sur la PSD peuvent être avantageusement observés dans la suite des figures à cette valeur du nombre de Strouhal. On peut afficher la valeur de la PSD comme fonction de l'angle azimutal $\Phi$ et de la position axiale x/D sur la surface définie par le cylindre de mesure. La position axiale peut aussi être exprimée par un angle polaire $\theta$. Le panneau B illustre la PSD pour $St \simeq 0,2$. Les mesures sont effectuées dans le cas où M= 0,4 Mach pour un éloignement entre l'aile et le réacteur correspondant à r/D=1 et un angle de balayage du bord de fuite $\beta = 0°$. L'angle azimutal des microphones, $\Phi$ est mesuré dans le sens trigonométrique par rapport à l'axe des x. Les coordonnées des x ont pour origine l'ajutage du réacteur et sont positives dans le sens 11 de l'écoulement du réacteur. L'effet de l'aile sur la radiation du son à ce nombre de Strouhal se traduit par de larges lobes apparaissant sur les côtés (pour $\Phi = 90°$ et $\Phi = 270°$) pour des angles polaires élevés, c'est-à-dire une faible valeur de x/D. L'amplification peut être observée de manière quantitative par rapport à la condition de jet libre en considérant la structure azimutale de la PSD pour x/D = 4, le long de l'axe (a).

Le panneau C de la figure 5 illustre la directivité azimutale d'un jet installé. Le SPL (dB/St) est présenté en fonction de $\Phi$ pour le cas d'un jet libre (b) et d'un jet installé (a), pour x/D = 4. Les mesures sont effectuées dans le cas où $\theta$=90°, dans le cas d'un angle de balayage nul et M= 0,4 Mach pour un éloignement entre l'aile et le réacteur correspondant à r/D=1. La structure dipolaire du profil dans le cas du jet installé peut être évaluée en considérant les sections (b) et (c) du panneau B de la figure 5, correspondant respectivement aux côtés protégé et non-protégé. Ces profils sont tracés dans le panneau D de la figure 5.

Le panneau D de la figure 5 illustre le SPL en fonction d'une coordonnée axiale. Les mesures sont effectuées dans le cas où $\Phi$=90° et $\Phi$=270°, dans le cas d'un angle de balayage nul, M= 0,4 Mach et pour un éloignement entre l'aile et le réacteur correspondant à r/D=1. Les trois courbes présentent les cas d'un jet libre (« free jet ») et, dans le cas d'un jet installé, des mesures du côté protégé (« shielded ») et du côté non protégé (« unshielded ») correspondant respectivement aux sections (b) et (c) du panneau B de la figure 5. Ces courbes montrent que la directivité du son radié est dipolaire, c'est-à-dire asymétrique : le côté non-protégé comporte un pic plus marqué. Cette asymétrie peut-être associée à deux effets. D'une part, le champ diffracté doit radier au travers du jet turbulent du côté non protégé. Pour des angles polaires faibles le chemin de propagation au travers de l'écoulement est de l'ordre de plusieurs longueurs d'ondes acoustiques ; une interaction entre l'acoustique et l'écoulement est alors possible. D'autre part, les interférences entre le champ direct et le champ diffracté sont différentes de chaque côté. Les modèles de propagation, basés sur une analogie acoustique de Lighthill, peuvent seulement rendre compte du second effet.

La figure 6 illustre des dépendances polaires et azimutales du champ sonore en fonction de l'éloignement radial de l'aile au réacteur. L'ensemble des panneaux de la figure présente des résultats pour une aile rectangulaire, à M = 0,4 Mach, St=0,2 et $\beta$=0°. Le panneau A de la figure 6 présente les valeurs de dB/St en fonction de la directivité azimutale pour différentes valeurs de r/D allant de 0,6 à 2 (respectivement dans le sens de la flèche). Le panneau B de la figure 6 présente les valeurs de SPL en fonction de la dépendance axiale pour différentes valeurs de r/D allant de 0,6 à 2 pour le côté protégé. Le panneau C de la figure 6 présente les valeurs de SPL en fonction de x/D pour différentes valeurs de r/D allant de 0,6 à 2 pour le côté non-protégé. Les valeurs de dB/St sont considérablement réduites lorsque le réacteur est éloigné de l'aile, c'est-à-dire lors de l'augmentation de r/D. L'évolution du SPL sur un côté de l'aile est approximativement exponentielle pour $1 \leq r/D \leq 2$. Un changement de cette évolution a lieu entre r/D=1 et r/D =0,6. Ce changement est associé à une interaction renforcée entre le jet et l'aile, par exemple pour r/D =0,6. A cette position, deux phénomènes peuvent coexister : une déformation en champ moyen, mais aussi un écoulement affleurant non négligeable sur l'aile. Une couche limite turbulente peut aussi exister, dont la rupture sur le bord de fuite peut induire une diffraction du champ sonore et constituer une source supplémentaire, indépendante de la source modélisée précédemment par des paquets d'onde. C'est seulement cette dernière composante qui est analysée dans l'art antérieur, pour aboutir par exemple aux dispositifs de Mengle *et al.* La présente invention prend en compte l'ensemble des composantes décrites.

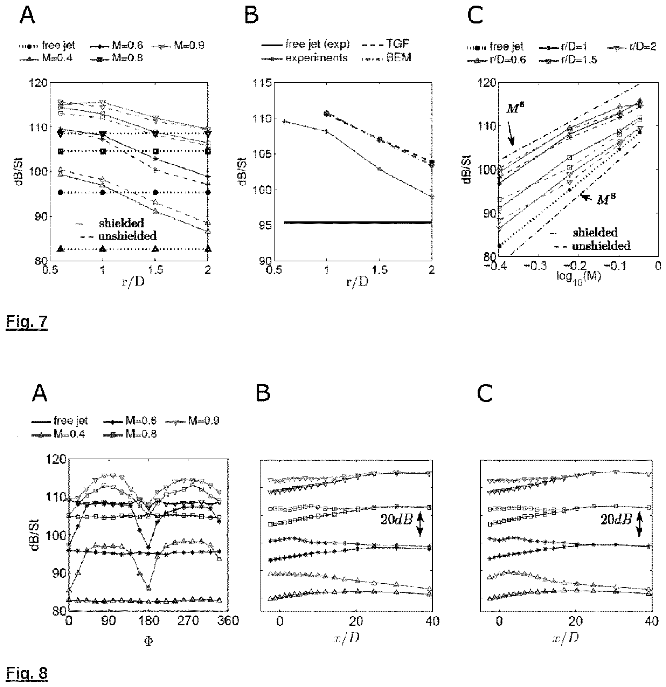

La figure 7 illustre la dépendance du champ acoustique diffracté en fonction de la séparation radiale entre le réacteur et l'aile et en fonction de la vitesse de l'écoulement en sortie du réacteur. Le panneau A de la figure 7 illustre une mesure expérimentale du rapport de SPL en fonction de r/D sur les côtés protégé (ligne pleine) et non-protégé (pointillés) dans une configuration installée et dans une configuration non-installée (jet libre), en utilisant les paramètres St=0,2, x/D=4 et β=0°. Le panneau B de la figure 7 illustre une comparaison entre les mesures (en ligne pleine claire) de SPL en fonction de r/D et les simulations numériques en utilisant la méthode TGF (pointillés foncés réguliers) et BEM (pointillés clairs irréguliers), pour M = 0,6 Mach. La ligne continue noire de base illustre le cas non-installé. La dépendance exponentielle du champ diffracté en fonction de l'éloignement radial de l'aile et du réacteur provient de la génération du champ sonore par des instabilités hydrodynamiques, dont les fluctuations présentent une décroissance de l'amplitude exponentielle, contrairement aux tourbillons compacts et stochastiques dont la décroissance en champ porche est algébrique. Cette dépendance exponentielle est observée pour toutes les vitesses considérées.

L'effet de r/D sur la directivité polaire n'est pas fort dans la gamme $1 \leq r/D \leq 2$. Le cas de la condition r/D = 0,6 est différent : un pic polaire est observé en prenant en compte les deux côtés, protégé et non-protégé. Le panneau B de la figure 7 illustre la capacité des modèles à capturer l'effet de la variation de r/D. A la fois la TGF et la BEM permettent de capturer l'évolution des mesures. La modélisation concerne seulement la composante $T_{11}$ du terme de source de Lighthill linéarisé, au mode azimutal m=0. On peut remarquer qu'en considérant les résultats sur les côtés, les méthodes TGF et BEM présentent des résultats comparables.

Le panneau C de la figure 7 illustre la dépendance des mesures expérimentales du SPL en fonction de la vitesse M pour différents rapports r/D et en configuration non-installée. Le SPL est illustré pour des mesures aux couples (θ,Φ)= (75°, 90°) (lignes pleines) et (θ,Φ)= (75°, 270°) (pointillés), indiquant une dépendance en vitesse variant en fonction de l'éloignement radial et tendant vers le cas non-installé.

La dépendance du SPL en r/D décrite dans les panneaux A et B de la figure 7 modélisent bien le problème technique rencontré lors de l'utilisation d'un réacteur à haut taux de dilution. Dans des réalisations de l'invention, décrites dans les figures 1 et 2, le rapport r/D dans le cas d'un réacteur à haut taux de dilution est inférieur à 2 et préférentiellement inférieur à 1,5. De même, la dépendance du SPL en fonction de M décrit dans le panneau C de la figure 7 modélise l'effet de la vitesse d'écoulement d'un réacteur à haut taux de dilution sur le bruit d'installation. Dans des réalisations de l'invention, la vitesse de croisière du réacteur à haut taux de dilution peut être comprise entre 0,3 et 0,9 Mach.

La figure 8 illustre les variations de SPL en fonction de la vitesse d'écoulement M en sortie d'un réacteur. Dans chacun des panneaux de la figure 8, les courbes noires correspondent à une configuration non-installée. On observe que quand la vitesse M augmente, l'amplitude du bruit des jets en configuration installée augmente. En revanche, l'effet de l'aile est atténué par le bruit propre au jet (bruit « direct ») pour des valeurs croissantes de vitesse. L'amplitude relative des lobes présentés par la mesure des côtés diminue alors pour des vitesses croissantes. Cet effet peut être attribué aux différentes dépendances en vitesse des champs mesuré en configuration installé et non-installé. La comparaison des panneaux B et C de la figure 8 permet d'illustrer la directivité polaire. Le panneau B de la figure 8 présente des mesures de la SPL en fonction de x/D en configuration non-installée et en configuration installée du côté protégé. Le panneau C de la figure 8 présente des mesures de la SPL en fonction de x/D en configuration non-installée et en configuration installée du côté non-protégé. Pour une vitesse croissante, la signature du champ diffracté devient restreinte aux angles à caractère polaire: à M = 0,4 Mach, la composante de diffraction est observée pour tous les angles polaires, tandis qu'à M=0,9 Mach, l'amplification est limitée à x/D < 20. On peut aussi observer dans les panneaux B et C de la figure 8 des lobes additionnels associés à des diffractions secondaires provenant d'autres bords et coins de l'aile. Cet effet, ainsi que la capacité des modèles à les capturer, seront plus clairs dans la suite de la description en considérant les figures de PSD.

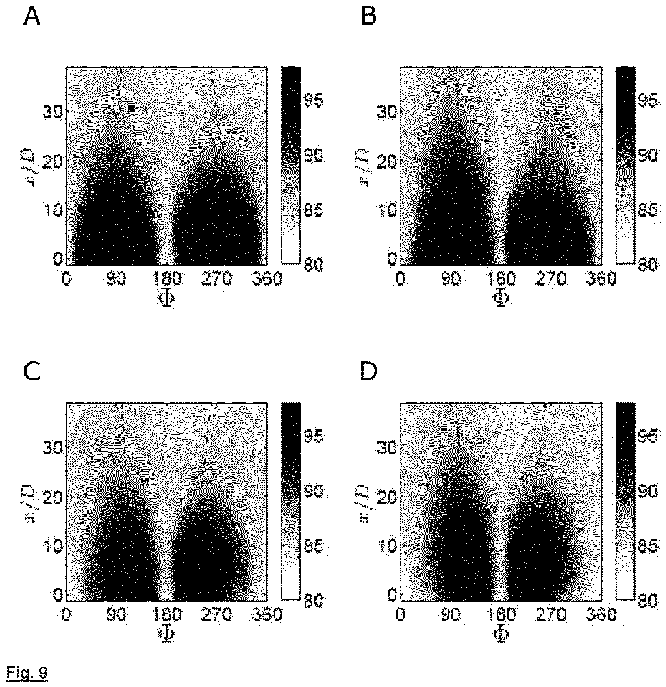

La figure 9 illustre l'effet de l'angle de balayage sur la diffraction du bruit d'installation. Le panneau A de la figure 9 illustre la PSD en fonction de x/D et Φ pour un angle de balayage β=0°. Le panneau B de la figure 9 illustre la PSD en fonction de x/D et Φ pour un angle de balayage β=15°. Le panneau C de la figure 9 illustre la PSD en fonction de x/D et Φ pour un angle de balayage β=30°. Le panneau D de la figure 9 illustre la PSD en fonction de x/D et Φ pour un angle de balayage β=45°. Les paramètres M=0,4 et r/D=1 sont choisis pour les représentations des PSD de la figure 7 dans l'ensemble des panneaux. L'effet de la variation du balayage est le plus marqué aux angles hautement polaires, auxquels, comme décrit dans les figures précédentes, la diffraction est la plus forte. L'angle de balayage varie de 0° à 45° lors des expériences. Trois effets principaux sont observés lors de la variation de l'angle de balayage. Les lobes de radiation deviennent progressivement plus étroits en azimut lors de l'augmentation de l'angle de balayage. La position des pics de radiation subit une rotation pour s'aligner avec les droites représentées en pointillés dans l'ensemble des panneaux de la figure 9. Enfin, les inventeurs ont découvert une réduction majeure du bruit produit aux positions Φ=90° et Φ=270° lors de l'augmentation de l'angle de balayage β.

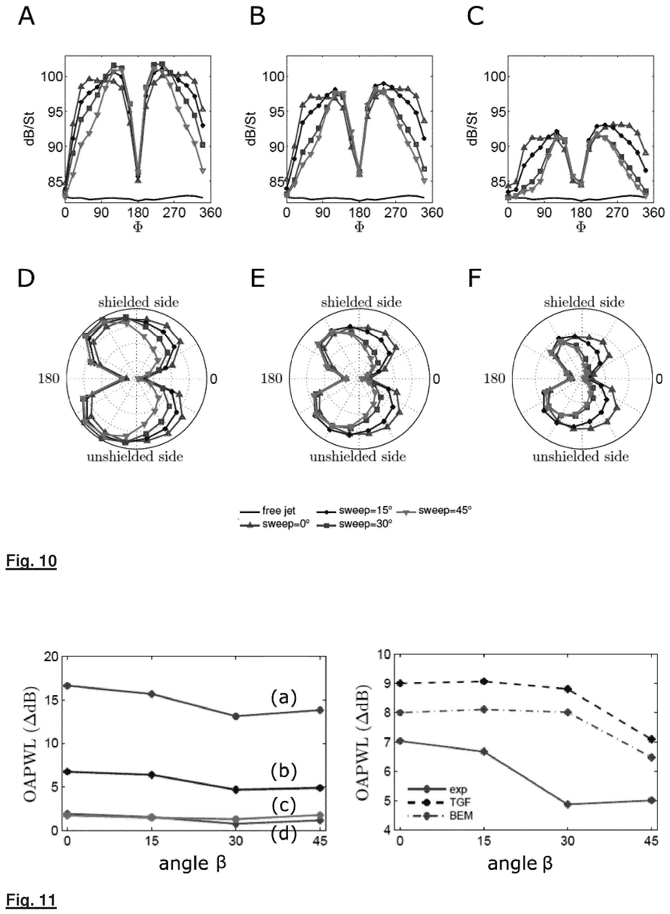

La figure 10 illustre l'effet de l'angle de balayage sur la diffraction du bruit d'installation. On observe dans l'ensemble des panneaux de la figure 10 la directivité azimutal le long de la section (a) de la figure 5 pour trois éloignements radiaux différents entre aile et réacteur (r/D= 0,6 pour les panneaux A et D, r/D= 1 pour les panneaux B et E, r/D= 1,5 pour les panneaux C et F). Les panneaux A et D présentent les mêmes SPL, dans une représentation dépliée dans le panneau A et dans une représentation pliée dans le panneau D. De même, Les panneaux B et E présentent les mêmes SPL, dans une représentation dépliée dans le panneau B et dans une représentation pliée dans le panneau E. Les panneaux C et F présentent les mêmes SPL, dans une représentation dépliée dans le panneau C et dans une représentation pliée dans le panneau F. La réduction du bruit peut atteindre 8 dB (pour toutes les positions radiales de l'aile). Une augmentation du SPL au niveau des pics peut être observée pour les plus faibles r/D (par exemple pour r/D = 0,6) mais la réduction du bruit couvre une plus large gamme azimutale. On observe une réduction globale du bruit. Cet effet peut être observé en calculant la puissance sonore traversant le cylindre de mesure.

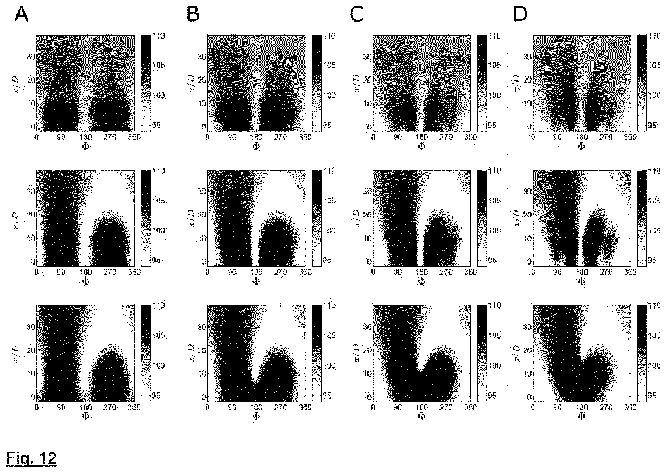

La figure 11 illustre l'augmentation de puissance sonore totale pour différents angles de balayage et pour différentes vitesses d'écoulement à la sortie du réacteur. Le panneau A de la figure 12 illustre l'augmentation du SPL en fonction de β pour les vitesses M= 0,4 Mach (a), M= 0,6 Mach (b), M= 0,8 Mach (c), M= 0,9 Mach (d). Les résultats présentés dans cette figure correspondent à une configuration installée. Pour les angles de balayage les plus élevés, une réduction globale de la puissance sonore atteignant jusqu'à 3dB est réalisée pour la plus basse vitesse considérée, M = 0,4. La réduction maximum est atteinte dans le cas où β=30°. On observe la même tendance pour des vitesses d'écoulement M plus élevées mais avec une réduction du gain, la contribution du bruit direct du jet devenant dominante.

Le panneau B de la figure 11 illustre l'augmentation de la SPL pour différents angles de balayage en comparant les résultats obtenus expérimentalement et avec les méthodes numériques BEM et TGF, pour les paramètres M=0,6 Mach et r/D=1.

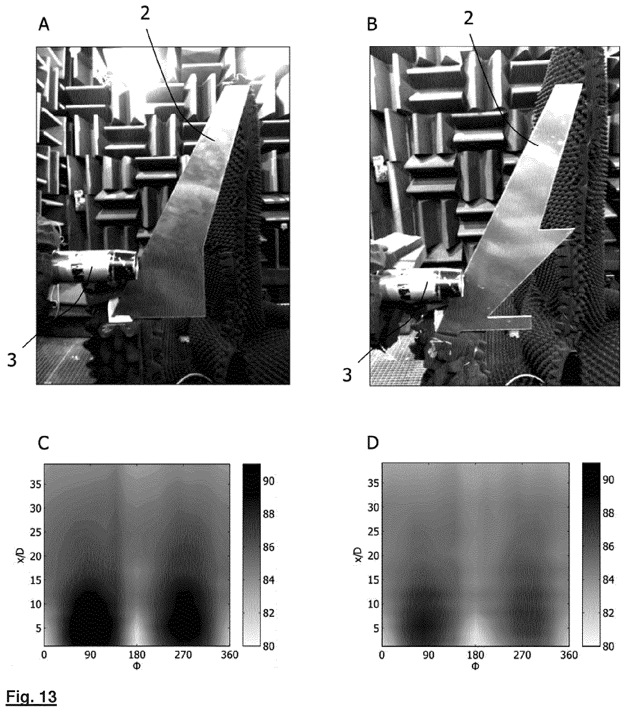

La figure 12 illustre les SPL en fonction de Φ et de x/D dans des conditions expérimentales et de simulations numériques pour différents angles de balayage. Chacun des panneaux A, B, C et D de la figure 13 présentent, de haut en bas, trois représentations du SPL : en haut les résultats expérimentaux, au milieu les résultats de simulations numériques utilisant la méthode BEM et en bas les résultats de simulations numériques utilisant la méthode TGF. Le panneau A de la figure 12 correspond à un angle β= 0°, le panneau B de la figure 12 correspond à un angle β= 15°, Le panneau C de la figure 12 correspond à un angle β= 30° et le panneau D de la figure 12 correspond à un angle β= 45°.

La figure 13 illustre les simulations expérimentales de mesure du bruit de systèmes d'aile et de réacteur. Le panneau A de la figure 13 est une photographie de l'installation expérimentale de mesure du bruit d'installation radié par une aile dont la géométrie est semblable à celle des ailes décrites dans les panneaux A de la figure 1 et de la figure 2. La géométrie de cette aile décrit celle d'un airbus A320. Une mesure est effectuée avec une vitesse d'écoulement du réacteur M=0,4 Mach. Le panneau C de la figure 13 présente les résultats de mesure du SPL dans la configuration décrite par le panneau A de la même figure.

Le panneau B de la figure 13 est une photographie de l'installation expérimentale de mesure du bruit d'installation radié par une aile dont la géométrie est celle d'une aile d'un système selon une réalisation de l'invention. Une mesure est effectuée avec une vitesse d'écoulement du réacteur M =0,4 Mach. Le panneau D de la figure 13 présente les résultats de mesure du SPL dans la configuration décrite par le panneau B de la même figure.

La comparaison des panneaux C et D de la figure 13 permet d'observer une différence du bruit d'installation global radié entre une configuration simulant un système de l'art antérieur et une configuration simulant une réalisation de l'invention. Le bruit d'installation radié est avantageusement plus faible dans le second cas. Les différentes réalisations de l'invention tirent parti de cette découverte. Les résultats de la figure 13 montrent que la forme globale de l'aile peut être modifiée pour réduire le bruit d'installation (et non pas seulement les volets ou les ailerons). Les réalisations de l'invention comportent un bord de fuite incliné, dont l'angle de balayage est défini dans la figure 1, et, dans les cas ou l'aile comporte des volets ou des ailerons, ces derniers ne sont pas aptes (mécaniquement par exemple) à réaliser une inclinaison ou un décrochement du bord de fuite sur une longueur comparable à la longueur d'onde de la source décrite dans la figure 4. Le bord longitudinal arrière de l'aile peut alors être lui aussi incliné, selon une réalisation de l'invention, avec un angle de balayage défini dans la figure 2 pour résoudre ce problème technique.

Plus généralement, l'analyse des causes physiques du bruit d'installation a permis aux inventeurs de découvrir que le décrochage géométrique, impliquant une augmentation de l'angle β, du bord de fuite ou du bord longitudinal arrière en interaction avec le jet du ou des réacteurs doit être de l'ordre de grandeur de la longueur d'onde de la source de bruit décrite dans la figure 4, c'est-à-dire de l'ordre de grandeur du diamètre du réacteur D. Plus précisément, la longueur de la première partie 5 d'un bord de fuite ou de la partie 8 d'un bord longitudinal arrière de l'aile peut être comprise entre 0,2 et 5 fois le diamètre du réacteur D et préférentiellement entre une fois et 5 fois le diamètre du réacteur D. Les chevrons réalisés dans l'art antérieur ont par exemple une taille caractéristique un ou deux ordres de grandeur inférieure (1/15 dans Mengle *et al.*) au décrochage décrit dans les différentes réalisations de l'invention, ce qui explique que le jet perçoive l'angle moyen du bord de fuite dans l'art antérieur et non l'angle de balayage exact des chevrons.

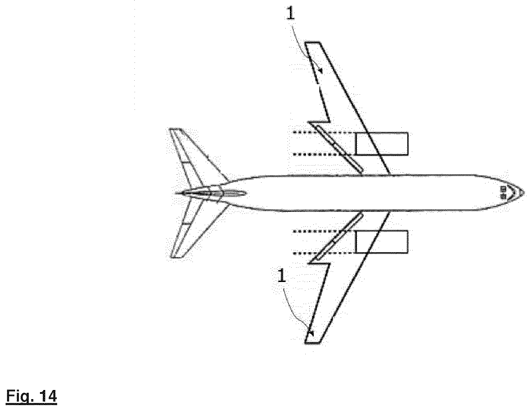

La figure 14 illustre schématiquement en vue de dessus un avion selon une réalisation de l'invention comportant des systèmes 1. Les systèmes 1 comportent des ailes et des réacteurs à haut taux de dilution décrits dans les réalisations de l'invention des figures 1 et 2.

**Revendications**

1. Dispositif comprenant :

   • une aile (2) d'avion ;
   • au moins un réacteur (3) à haut taux de dilution fixé à ladite aile (2), adapté à émettre un jet (4) intercepté exclusivement par une première partie (5) du bord de fuite de ladite aile, les angles orientés $\alpha$ étant définis par un vecteur suivant le sens (11) dudit jet (4) et par un vecteur suivant la tangente en un point de ladite première partie (5) du bord de fuite (6) et orienté vers le saumon de ladite aile, et les angles orientés $\gamma$ étant définis par un vecteur suivant le sens (11) d'un dit jet et un vecteur suivant la tangente en un point dudit bord de fuite n'appartenant pas à ladite première partie (5) du bord de fuite et orienté vers le saumon de ladite aile, **caractérisé en ce que** :

      • la plage formée par l'ensemble des angles orientés a, est comprise dans une plage d'angles délimitée par 5° et 65° ;
      • la moyenne sur la longueur dudit bord de fuite (6) des angles orientés $\gamma$ est supérieure d'au moins 10° à la moyenne des angles $\alpha$ sur la longueur de ladite première partie (5) du bord de fuite.

2. Dispositif selon la revendication précédente dans lequel ladite première partie (5) du bord de fuite (6) est linéaire, ledit angle $\alpha$ étant constant et compris dans une plage d'angles délimitée par 5° et 65°, et préférentiellement compris dans une plage d'angles délimitée par 40° et 65°.

3. Dispositif selon l'une des revendications précédentes dans lequel ladite aile (2) comporte au moins une partie principale fixe (10) dont une partie (8) du bord longitudinal arrière est adaptée à intercepter ledit jet (4), et dans lequel la plage formée par l'ensemble des angles orientés a' définis par un vecteur suivant le sens (11) dudit jet et un vecteur suivant la tangente en chaque point de ladite partie (8) du bord longitudinal arrière et orienté vers le saumon de ladite aile (2), est comprise dans une plage d'angles délimitée par 5° et 65°.

4. Dispositif selon la revendication 3 dans lequel chaque dit angle a' est compris dans la plage délimitée par 5° et 65° et dans lequel la moyenne sur la longueur dudit bord longitudinal arrière des angles orientés $\gamma'$ formés par un vecteur suivant le sens (11) d'un dit jet et un vecteur suivant la tangente en un point dudit bord longitudinal arrière n'appartenant pas à chaque dite partie (8) du bord longitudinal arrière et orienté vers le saumon de ladite aile, est supérieure d'au moins 10° à la moyenne des angles a' de chaque dite partie (8) du bord longitudinal arrière.

5. Dispositif selon l'une des revendications précédentes dans lequel le rapport de la distance r entre l'axe principal du réacteur (3) et l'aile (2), et du diamètre D dudit jet à la sortie dudit réacteur est inférieur à 2 et préférentiellement inférieur à 1,5.

6. Dispositif selon l'une des revendications précédentes dans lequel la vitesse maximale de l'écoulement gazeux à la sortie dudit réacteur (3) est comprise entre 0,3 Mach et 0,9 Mach et préférentiellement entre 0,6 Mach et 0,8 Mach.

7. Avion comprenant au moins deux dispositifs selon l'une des revendications précédentes.

**Patentansprüche**

1. Vorrichtung, umfassend:

   • eine Tragfläche (2) eines Flugzeugs;
   • mindestens ein an der Tragfläche (2) befestigten Strahltriebwerk (3) mit hohem Nebenstromverhältnis, dazu geeignet, einen ausschließlich durch ein erstes Teil (5) der Hinterkante der Tragfläche abgefangenen Strahl (4) auszustoßen, wobei die orientierten Winkel α durch einen in der Richtung (11) des Strahls (4) verlaufenden Vektor und einen Vektor definiert sind, welcher wie die Tangente in einem Punkt des ersten Teils (5) der Hinterkante (6) verläuft und zur Spitze der Tragfläche ausgerichtet ist, und wobei die orientierten Winkel γ durch einen in der Richtung (11) des einen Strahls verlaufenden Vektor und einen Vektor definiert sind, welcher wie die Tangente in einem nicht zum ersten Teil (5) der Hinterkante gehörenden Punkt der Hinterkante verläuft und zur Spitze der Tragfläche ausgerichtet ist, **dadurch gekennzeichnet, dass**:

• die durch die Gesamtheit der orientierten Winkel α gebildete Fläche innerhalb einer Winkelfläche liegt, welche zwischen 5° und 65° begrenzt ist;
• der Mittelwert der orientierten Winkel γ auf der Länge der Hinterkante (6) mindestens um 10° größer als der Mittelwert der Winkel α auf der Länge des einen ersten Teils (5) der Hinterkante ist.

2. Vorrichtung nach dem vorhergehenden Anspruch, bei welcher das erste Teil (5) der Hinterkante (6) linear ist, wobei der eine Winkel α konstant ist und innerhalb einer zwischen 5° und 65° begrenzten Winkelfläche liegt und bevorzugt innerhalb einer zwischen 40° und 65° begrenzten Winkelfläche liegt.

3. Vorrichtung nach einem der vorhergehenden Ansprüche, bei welcher die Tragfläche (2) mindestens ein festes Hauptteil (10) beinhaltet, dessen ein Teil (8) der hinteren Längskante dazu geeignet ist, den Strahl (4) abzufangen, und bei welcher die durch die Gesamtheit der orientierten Winkel a' gebildete Winkelfläche, welche Winkel durch einen in der Richtung (11) des Strahls verlaufenden Vektor und durch einen wie die Tangente in jedem Punkt des Teils (8) der hinteren Längskante verlaufenden und zur Spitze der Tragfläche (2) ausgerichteten Vektor definiert sind, innerhalb einer zwischen 5° und 65° begrenzten Winkelfläche liegt.

4. Vorrichtung nach Anspruch 3, bei welcher jeder Winkel a' innerhalb der zwischen 5° und 65° begrenzten Winkelfläche liegt und bei welcher auf der Länge der hinteren Längskante der Mittelwert der orientierten Winkel a', die durch einen in Richtung (11) des einen Strahls verlaufenden Vektor und durch einen Vektor gebildet sind, der wie die Tangente in einem nicht zu jedem Teil (8) der hinteren Längskante gehörenden Punkt verläuft und zur Spitze der Tragfläche ausgerichtet ist, mindestens um 10° größer als der Mittelwert der Winkel a' jedes Teils (8) der hinteren Längskante ist.

5. Vorrichtung nach einem der vorhergehenden Ansprüche, bei welcher das Verhältnis Entfernung r zwischen der Hauptachse des Strahltriebwerks (3) und der Tragfläche (2) zum Durchmesser D des Strahls beim Auslass aus dem Triebwerk kleiner als 2 und bevorzugt kleiner als 1,5 ist.

6. Vorrichtung nach einem der vorhergehenden Ansprüche, bei welcher die maximale Geschwindigkeit des Gasaustrittes am Auslass des Strahltriebwerks (3) zwischen Mach 0,3 und Mach 0,9 und bevorzugt zwischen Mach 0,6 und Mach 0,8 liegt.

7. Flugzeug mit mindestens zwei Vorrichtungen nach einem der vorhergehenden Ansprüche.

## Claims

1. Device comprising:

• an aircraft wing (2);
• at least one jet engine (3) with high bypass ratio attached to said wing (2), suitable for emitting a jet (4) intercepted exclusively by a first portion (5) of the trailing edge of said wing, the angles with orientation α being defined by a vector following the direction (11) of said jet (4) and by a vector following the tangent at a point of said first portion (5) of the trailing edge (6) and oriented towards the wing tip of said wing, and the angles with orientation γ being defined by a vector following the direction (11) of a said jet and a vector following the tangent at a point of said trailing edge not belonging to said first portion (5) of the trailing edge and oriented towards the wing tip of said wing,

**characterised in that**:

• the range formed by the set of angles with orientation α, is included within a range of angles delimited by 5° and 65°,
• the average over the length of said trailing edge (6) of the angles with orientation $\gamma$ is at least 10° greater than the average of the angles $\alpha$ on the length of said first portion (5) of the trailing edge.

2.  Device according to the preceding claim wherein said first portion (5) of the trailing edge (6) is linear, said angle $\alpha$ being constant and included within a range of angles delimited by 5° and 65°, and preferably included within a range of angles delimited by 40° and 65°.

3.  Device according to one of the preceding claims wherein said wing (2) comprises at least one fixed main portion (10) of which a portion (8) of the rear longitudinal edge is suitable for intercepting said jet (4), and wherein the range formed by the set of angles with orientation $\alpha'$ defined by a vector following the direction (11) of said jet and a vector following the tangent at each point of said portion (8) of the rear longitudinal edge and oriented towards the wing tip of said wing (2), is included within a range of angles delimited by 5° and 65°.

4.  Device according to claim 3 wherein each said angle $\alpha'$ is included within the range delimited by 5° and 65° and wherein the average over the length of said rear longitudinal edge of the angles with orientation $\gamma'$ formed by a vector following the direction (11) of a said jet and a vector following the tangent at a point of said rear longitudinal edge not belonging to each said portion (8) of the rear longitudinal edge and oriented towards the wing tip of said wing, is at least 10° greater than the average of the angles $\alpha'$ of each said portion (8) of the rear longitudinal edge.

5.  Device according to one of the preceding claims wherein the ratio of the distance r between the main axis of the jet engine (3) and the wing (2), to the diameter D of said jet at the exit of said jet engine is less than 2 and preferably less than 1.5.

6.  Device according to one of the preceding claims wherein the maximum velocity of the gas flow at the exit of said jet engine (3) is between 0.3 Mach and 0.9 Mach and preferably between 0.6 Mach and 0.8 Mach.

7.  Aircraft comprising at least two devices according to one of the preceding claims.

A

$\gamma_1$

2

6

$\alpha_2$

3

$\alpha_1$

11

5

4

Fig.1

B

1

2

6

$\gamma_2$

$\alpha_3$

3

11

5

4

A

$\gamma_3'$

10

2

9

$\alpha_5'$

$\alpha_4'$

3

8

11

4

Fig. 2

B

1

10

2

$\gamma_4'$

$\alpha_6'$

3

11

9

8

4

Fig. 3

Fig. 4

Fig. 5

Fig. 6

Fig. 7

Fig. 8

**Fig. 9**

A

B

C

D

E

F

shielded side

shielded side

shielded side

unshielded side

unshielded side

unshielded side

— free jet   —●— sweep=15°   —▼— sweep=45°
—▲— sweep=0°   —■— sweep=30°

Fig. 10

Fig. 11

Fig. 12

Fig. 13

Fig. 14

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **MENGLE, V. G. ; STOKER, R. W. ; BRUSNIAK, L. ; ELKOBY, R. ; THOMAS, R. H.** Flaperon modification effect on jet-flap interaction noise reduction for chevron nozzles. *13th AIAA/CEAS Aeroacoustics Conférence, 28th AIAA Aeroacoustics Conference,* Mai 2007, 3666
- **CAVALIERI, A. V. ; JORDAN, P. ; COLONIUS, T. ; GERVAIS, Y.** Axisymmetric superdirectivity in subsonic jets. *Journal of fluid Mechanics,* 2012, vol. 704, 388-420
- **TINNEY, C. E. ; JORDAN, P.** The near pressure field of co-axial subsonic jets. *Journal of Fluid Mechanics,* 2008, vol. 611, 175-204
- **WILLIAMS, J. E. ; HALL, L. H.** Aerodynamic sound generation by turbulent flow in the vicinity of a scattering half plane. *Journal of Fluid Mechanics,* 1970, vol. 40 (04), 657-670
- **ZHANG, S. ; JIN, J. M.** Computation of special functions. Wiley-Interscience, 1996